# EUROPÄISCHE PATENTSCHRIFT

(11) **EP 3 966 470 B1**
(45) Veröffentlichungstag und Bekanntmachung des Hinweises auf die Patenterteilung: **17.07.2024**
(21) Anmeldenummer: 20720737.4
(22) Anmeldetag: 14.04.2020
(51) Int. Cl.: F16F 15/26

(54) **BRENNKRAFTMASCHINE MIT MASSENAUSGLEICHSGETRIEBE MIT ZWEI AUSGLEICHSWELLEN**
INTERNAL COMBUSTION ENGINE HAVING A MASS BALANCING TRANSMISSION WITH TWO BALANCING SHAFTS
MOTEUR À COMBUSTION INTERNE COMPRENANT UN MÉCANISME D'ÉQUILIBRAGE DES MASSES POURVU DE DEUX ARBRES D'ÉQUILIBRAGE

(30) Priorität: 09.05.2019 DE 102019003288
(43) Veröffentlichungstag der Anmeldung: 16.03.2022
(73) Patentinhaber: DEUTZ Aktiengesellschaft, 51149 Köln (DE)
(72) Erfinder: JOISTEN-PIERITZ, Joachim, 53925 Kall (DE); KLEINSCHMIDT, Toni, 50321 Brühl (DE)
(86) Internationale Anmeldenummer: PCT/EP2020/000083
(87) Internationale Veröffentlichungsnummer: WO 2020/224796

(56) Entgegenhaltungen:
- EP-A2- 0 916 833
- EP-B1- 0 916 833
- DE-A1- 102011 075 897
- DE-A1- 102012 001 043
- DE-A1- 19 936 103
- US-A1- 2011 253 091

## Beschreibung

Die Erfindung betrifft eine Brennkraftmaschine mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf unter Bildung eines Brennraums abgedeckten Zylinder bewegbar ist und in dem Zylinderkopf Gaswechselventile angeordnet sind, die von mindestens einer Nockenwelle betätigt werden, die über ein Getriebe mit einem auf der Kurbelwelle angeordneten Rädertriebzahnrad verbunden ist, wobei ein Massenausgleichsgetriebe mit zwei Ausgleichswellen vorhanden ist.

Derzeit werden Massenausgleichsgetriebe über auf den Kurbelwellenwangen aufgezogene Zahnräder angetrieben. Diese Zahnräder sind systembedingt sehr groß und schwierig zu montieren. Diese aufwendige und kostenintensive Antriebsvariante wird durch einen stark begrenzten Bauraum bestimmt. Schmierölpumpen werden teilweise über im Kurbelgehäuse angebaute Zwischenradlagerungen angetrieben. Dadurch ergeben sich höhere Toleranzketten und die Problematik einer ungünstigen Schmierölversorgung der Zwischenradlagerung. Teilweise müssen beide Systeme gleichzeitig verbaut werden, um die Ölpumpe und gleichzeitig ein Massenausgleichsgetriebe antreiben zu können.

Aus der DE 10 2012 001043 A1 ist eine Brennkraftmaschine mit einem Massenausgleichsgetriebe mit zwei Massenausgleichswellen bekannt.

Weiter ist eine derartige Brennkraftmaschine aus der DE 41 28 432 A1 bekannt. Bei dieser Brennkraftmaschine ist ein Massenausgleichsgetriebe verbaut, das direkt in das Kurbelgehäuse der Brennkraftmaschine integriert ist. Einerseits ergibt sich dadurch die Möglichkeit, die Lagerstellen für die Ausgleichswellen des Massenausgleichsgetriebes bei der Bearbeitung des Kurbelgehäuses in einem gemeinsamen Arbeitsgang bei der Bearbeitung beziehungsweise Fertigung der Lagerstellen für beispielsweise die Kurbelwelle, Zwischenräder und die Nockenwelle zu fertigen. Dadurch ist eine sehr genaue Einhaltung der Abstände der einzelnen Lagerstellen zueinander möglich. Andererseits ist insbesondere bei Brennkraftmaschinen, die als Industriemotoren, Nutzfahrzeugmotoren oder Baumaschinenmotoren eingesetzt werden, ein Massenausgleichsgetriebe nur bedarfsweise erforderlich. Für den Fall, dass kein Massenausgleichsgetriebe benötigt wird, stellt zumindest die Bearbeitung der Lagerstellen für das Massenausgleichsgetriebe in dem Kurbelgehäuse einen zusätzliche Kosten verursachenden Mehraufwand dar.

Aus der DE 102 40 713 A1 ist eine Vorrichtung bekannt zum Ausgleich der Massenkräfte für eine Brennkraftmaschine mit zwei mit doppelter Kurbelwellendrehzahl gegenläufig betriebenen Ausgleichswellen, die unterhalb der Kurbelwelle, innerhalb der unter dem Kurbelgehäuse angebrachten Ölwanne angeordnet sind.

Daran ist nachteilig, dass die beschriebenen Varianten voluminös und teuer sind.

Der Erfindung liegt die Aufgabe zugrunde, eine Brennkraftmaschine bereitzustellen, die eine bauraumoptimierte und kostengünstige Antriebsvariante für den Antrieb einer Schmierölpumpe oder eines Massenausgleichsgetriebes oder beides in einer Brennkraftmaschine darstellt.

Diese Aufgabe wird dadurch gelöst, dass das Massenausgleichsgetriebe in einem Getrieberahmen angeordnet unterhalb der Kurbelwelle an das Kurbelgehäuse angebaut ist und von einem auf der Kurbelwelle angeordneten Antriebzahnrad angetrieben ist. Durch diese Ausbildung sind zunächst einmal, abgesehen von mit geringem Aufwand zu fertigenden Befestigungsgewinden für den Getrieberahmen, an dem Kurbelgehäuse keine unnötigen Bearbeitungsvorgänge erforderlich.

Hier wird vorteilhafterweise eine Zwischenradlagerung zum Antrieb einer Schmierölpumpe und/oder eines Massenausgleichgetriebes in den Hauptlagerstuhl integriert, so wird bei nur begrenzt vorhandenem Bauraum der Antrieb einer Ölpumpe und/oder eines Massenausgleichgetriebes möglich. Zur Schmierung des Zwischenrads wird die notwendige Ölmenge durch den Hauptlagerstuhl bereitgestellt. In einer alternativen Weiterbildung ist vorgesehen, dass das Zwischenrad mit einer Wälzlagerung ausgestattet ist, damit keine aktive Schmierstoffzufuhr aus dem Lagerstuhl notwendig ist. Ein weiterer Vorteil ist, dass sowohl Winkelfehler der Zahnräder als auch das Zahnflankenspiel zu dem auf der Kurbelwelle befindlichen Antriebszahnrad minimiert werden. Eine weitere andere vorteilhafte Weiterbildung sieht vor, dass die Schmierölversorgung der Zwischenradlagerung aus der Schmierölversorgung des Hauptlagers auf der Kurbelgehäuseseite abgegriffen wird. Eine Variante sieht vor, dass die Versorgungsbohrung des kurbelgehäuseseitigen Lagerstuhles angebohrt wird und die in die im Hauptlagerdeckel integrierte Zwischenradlagerung weitergeleitet wird. Eine andere Variante sieht vor, dass die Ölversorgung der Zwischenradlagerung durch eine kurbelgehäuseseitig verbaute Lagerschale mit integrierter rückenseitiger Ölversorgungsnut realisiert wird. Eine weitere Variante sieht vor, dass zur Ölversorgung der Zwischenradlagerung eine der Hauptlagerschraubenpfeifen mit Drucköl versorgt wird, wobei das Öl in den Lagerungszapfen zur Zwischenradschmierung eingespeist wird.

In Weiterbildung der Erfindung sind zwei miteinander kämmende Ausgleichswellenzahnräder vorgesehen und es ist axial neben einem Ausgleichswellenzahnrad ein Antriebszahnrad angeordnet, das über ein Ausgleichswellenzwischenzahnrad mit dem Massentriebzahnrad in Eingriff steht. Durch diese Kombination ist einerseits das einzustellende Übersetzungsverhältnis realisierbar, andererseits wird durch das Ausgleichswellenzwischenrad der Achsabstand zwischen der Kurbelwelle und den beiden Ausgleichswellen überbrückt.

In weiterer Ausgestaltung der Erfindung steht ein Ölpumpenzahnrad direkt mit dem Rädertriebzahnrad in Eingriff.

Weitere vorteilhafte Ausgestaltungen der Erfindung sind der Zeichnungsbeschreibung zu entnehmen, in der ein in den Figuren dargestelltes Ausführungsbeispiel näher beschrieben ist. Es zeigen:
- Fig. 1: eine Vorderansicht der Brennkraftmaschine mit teilmontiertem Rädertrieb mit Ausgleichsgetriebe und wälzgelagertem Zwischenrad
- Fig. 2: eine Vorderansicht der Brennkraftmaschine mit teilmontiertem Rädertrieb mit Ausgleichsgetriebe und gleitgelagertem Zwischenrad
- Fig. 3: eine Vorderansicht der Brennkraftmaschine mit teilmontiertem Rädertrieb mit Ausgleichsgetriebe und wälzgelagertem Zwischenrad
- Fig. 4: eine Vorderansicht der Brennkraftmaschine mit teilmontiertem Rädertrieb mit Ausgleichsgetriebe und gleitgelagertem Zwischenrad.

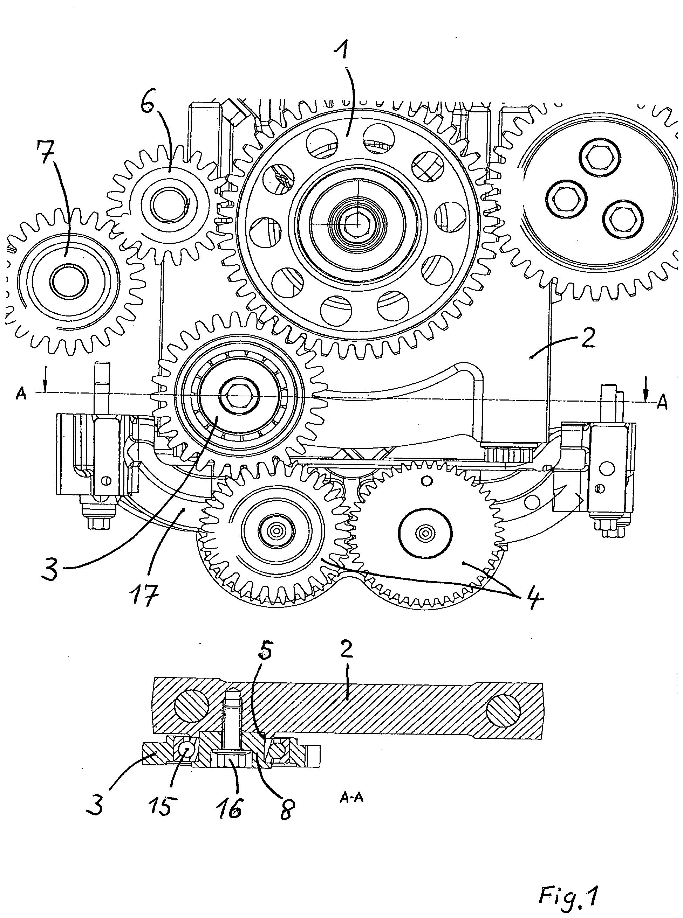

Auf den Fortsatz der Kurbelwelle ist ein Rädertriebzahnrad und ein Massenwellentriebzahnrad drehfest befestigt, wie in Fig. 1 gezeigt wird. Das Rädertriebzahnrad steht im Eingriff mit einem Stufenzahnrad, das wiederum mit einem Nockenwellenzahnrad kämmt. Ebenfalls von dem Rädertriebzahnrad wird ein Ölpumpenzahnrad angetrieben, das Bestandteil einer in dem Rädertriebgehäuse angeordneten Ölpumpe ist.

Das Kurbelwellenzahnrad 1 ist an der Kurbelwelle befestigt und steht mittels des am Lagerdeckel 2 angeschraubten Zwischenrads mit den Massenausgleichswellen 4 in Wirkverbindung. Am Lagerdeckel 2 ist eine Zentrieraufnahme 5 im Lagerdeckel angeordnet. Weiter ist das an der Kurbelwelle befestigte Kurbelwellenzahnrad 1 in einer Wirkverbindung mit dem Zwischenrad der Ölpumpe 6, welches wiederrum in einer Wirkverbindung mit dem Antriebsrad der Ölpumpe 7 steht. Der angeschraubte Lagerbolzen 8 nimmt das wälzgelagerte Zwischenrad 3 mit der Schraube 16 und dem Wälzlager 15 am Lagerdeckel 2 angeschraubt auf.

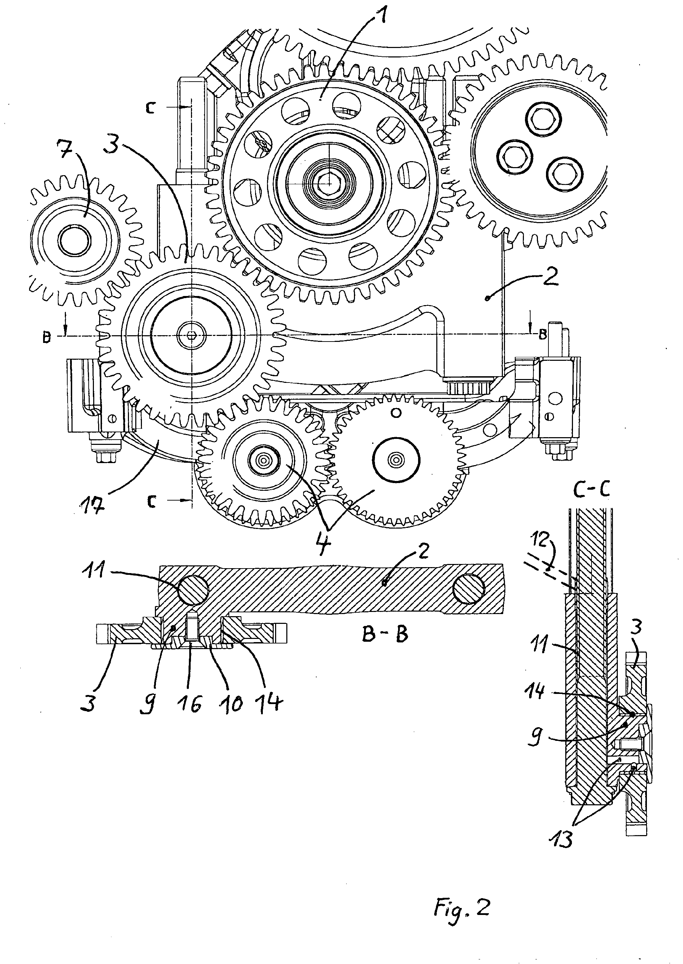

In der Ansicht nach Fig. 2 wird eine Vorderansicht der Brennkraftmaschine mit teilmontiertem Rädertrieb mit Ausgleichsgetriebe und gleitgelagertem Zwischenrad dargestellt.

Das Massenausgleichsgetriebe wird über ein Ausgleichswellenzwischenrad angetrieben, das seinerseits ein Antriebszahnrad antreibt, das axial vor einem Ausgleichswellenzahnrad angeordnet ist, das mit einem zweiten Ausgleichswellenzahnrad in Eingriff steht.

Diese beiden Ausgleichswellenzahnräder sind mit den Massenausgleichswellen verbunden, die in dem Getrieberahmen 17 des Massenausgleichsgetriebes gelagert sind. Dieser Getrieberahmen wird direkt an der Unterseite des Kurbelgehäuses festgeschraubt. Das Kurbelwellenzahnrad 1 ist an der Kurbelwelle befestigt und steht mittels des am Lagerdeckel 2 angeschraubten Zwischenrads 3 mit den Massenausgleichswellen 4 in Wirkverbindung. Weiter ist das an der Kurbelwelle befestigte Kurbelwellenzahnrad 1 in einer Wirkverbindung mit dem Zwischenrad 3, welches wiederum in einer Wirkverbindung mit dem Antriebsrad der Ölpumpe 7 steht. Der angegossene Lagerbolzen 9 nimmt das gleitgelagerte Zwischenrad 3 auf, welches mit der Anlaufscheibe 10 und der Schraube 16 am Lagerdeckel 2 angeschraubt ist. Der Ringspalt für die Ölversorgung 11 wird mittels des Ölzulaufs 12 aus der Lagerstuhlbohrung in den Ringspalt mit Öl zur Ölversorgung 13 des Gleitlagers 14 aus dem Ringspalt 11 versorgt.

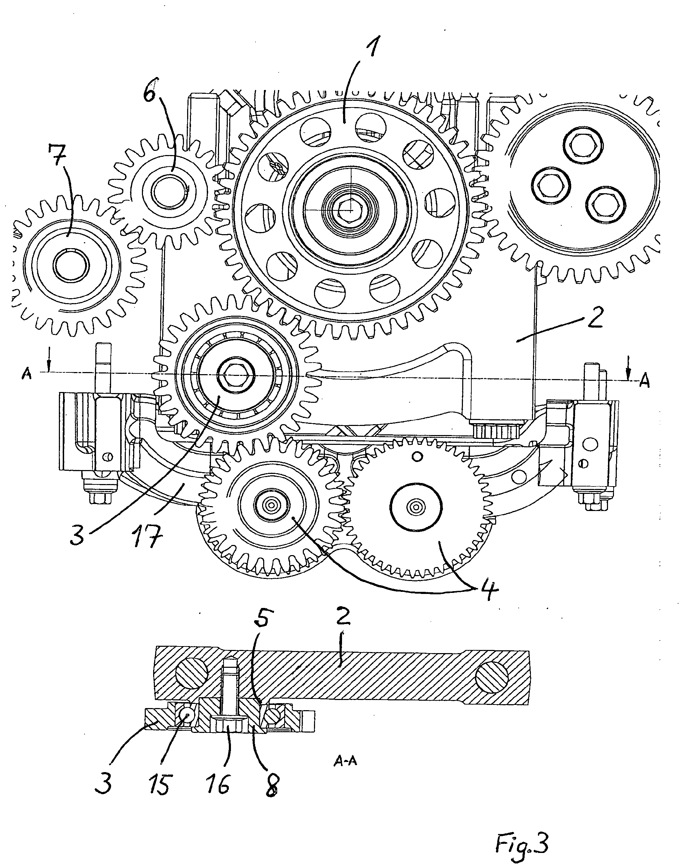

Die Darstellung in Fig. 3 zeigt eine Vorderansicht der Brennkraftmaschine mit teilmontiertem Rädertrieb mit Ausgleichsgetriebe und wälzgelagertem Zwischenrad 3. Das Kurbelwellenzahnrad 1 ist an der Kurbelwelle befestigt und steht mittels des am Lagerdeckel 2 angeschraubten Zwischenrads mit den Massenausgleichswellen 4 in Wirkverbindung. Am Lagerdeckel 2 ist eine Zentrieraufnahme 5 im Lagerdeckel angeordnet. Weiter ist das an der Kurbelwelle befestigte Kurbelwellenzahnrad 1 in einer Wirkverbindung mit dem Zwischenrad der Ölpumpe 6, welches wiederum in einer Wirkverbindung mit dem Antriebsrad der Ölpumpe 7 steht. Der angeschraubte Lagerbolzen 8 nimmt das wälzgelagerte Zwischenrad 3 mit der Schraube 16 und dem Wälzlager 15 am Lagerdeckel 2 angeschraubt auf.

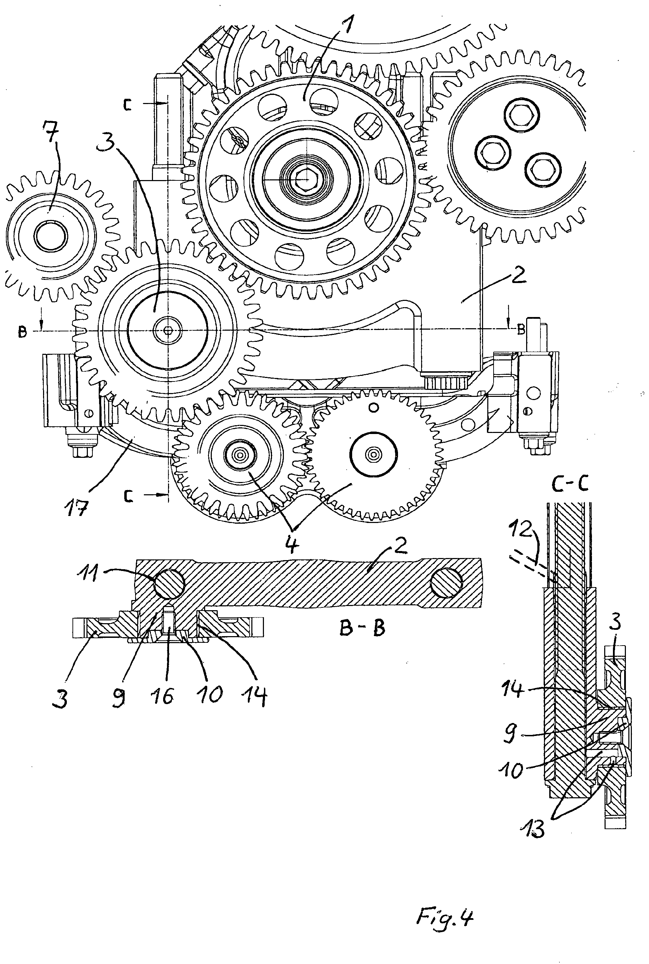

Fig. 4 zeigt eine Vorderansicht der Brennkraftmaschine mit teilmontiertem Rädertrieb mit Ausgleichsgetriebe und gleitgelagertem Zwischenrad 3. Das Kurbelwellenzahnrad 1 ist an der Kurbelwelle befestigt und steht mittels des am Lagerdeckel 2 angeschraubten Zwischenrads 3 mit den Massenausgleichswellen 4 in Wirkverbindung. Weiter ist das an der Kurbelwelle befestigte Kurbelwellenzahnrad 1 in einer Wirkverbindung mit dem Zwischenrad 3, welches wiederum in einer Wirkverbindung mit dem Antriebsrad der Ölpumpe 7 steht. Der angegossene Lagerbolzen 9 nimmt das gleitgelagerte Zwischenrad 3 auf, welches mit der Anlaufscheibe 10 und der Schraube 16 am Lagerdeckel 2 angeschraubt ist. Der Ringspalt für die Ölversorgung 11 wird mittels des Ölzulaufs 12 aus der Lagerstuhlbohrung in den Ringspalt mit Öl zur Ölversorgung 13 des Gleitlagers 14 aus dem Ringspalt 11 versorgt.

### Bezugszeichenliste

- 1: Kurbelwellenzahnrad
- 2: Lagerdeckel
- 3: Zwischenrad am Lagerdeckel angeschraubt
- 4: Massenausgleichswellen
- 5: Zentrieraufnahme im Lagerdeckel
- 6: Zwischenrad Ölpumpe
- 7: Antriebsrad der Ölpumpe
- 8: Lagerbolzen angeschraubt
- 9: Lagerbolzen am Lagerdeckel angegossen
- 10: Anlaufscheibe
- 11: Ringspalt für Ölversorgung
- 12: Ölzulauf aus Lagerstuhlbohrung in den Ringspalt
- 13: Ölversorgung des Gleitlagers aus dem Ringspalt
- 14: Gleitlager des Zwischenrads
- 15: Wälzlager des Zwischenrads
- 16: Schraube
- 17: Getrieberahmen

## Patentansprüche

1. Brennkraftmaschine mit einem Kurbelgehäuse, in dem eine Kurbelwelle in Lagern mit Lagerdeckeln (2) drehbar gelagert ist, an der zumindest ein einen Kolben tragendes Pleuel angelenkt ist, wobei der Kolben in einem von einem Zylinderkopf unter Bildung eines Brennraums abgedeckten Zylinder bewegbar ist und in dem Zylinderkopf Gaswechselventile angeordnet sind, die von mindestens einer Nockenwelle betätigt werden, die über ein Getriebe mit einem auf der Kurbelwelle angeordneten Kurbelwellenzahnrad (1) verbunden ist, wobei ein Massenausgleichsgetriebe mit zwei Ausgleichswellen (4) vorhanden ist,
**dadurch gekennzeichnet, dass** das Massenausgleichsgetriebe in einem Getrieberahmen (17) angeordnet unterhalb der Kurbelwelle an das Kurbelgehäuse angebaut ist und von dem auf der Kurbelwelle angeordneten Kurbelwellenzahnrad (1) durch ein neben dem Kurbelwellenzahnrad (1) angeordneten Zwischenrad (3) angetrieben ist, und wobei das Zwischenrad (3) am Hauptlagerdeckel (2) angeordnet ist.

2. Brennkraftmaschine nach Anspruch 1 ,
**dadurch gekennzeichnet, dass** die Schmierölversorgung einer Zwischenradlagerung aus einer Schmierölversorgung eines Hauptlagers kurbelgehäuseseitig dergestalt abgegriffen wird, dass eine Versorgungsbohrung eines kurbelgehäuseseitigen Lagerstuhles angebohrt wird und in die im Hauptlagerdeckel integrierte Zwischenradlagerung weitergeleitet.

3. Brennkraftmaschine nach Anspruch 1 ,
**dadurch gekennzeichnet, dass** die Schmierölversorgung einer Zwischenradlagerung aus einer Schmierölversorgung eines Hauptlagers kurbelgehäuseseitig dergestalt abgegriffen wird, dass eine Ölversorgung der Zwischenradlagerung durch eine kurbelgehäuseseitig verbaute Lagerschale mit einer integrierten rückenseitigen Ölversorgungsnut erfolgt.

4. Verfahren zum Betreiben einer Brennkraftmaschine,
**dadurch gekennzeichnet, dass** eine Vorrichtung nach einem oder mehreren der vorgenannten Ansprüche zum Einsatz kommt.

## Claims

1. An internal combustion engine having a crankcase in which a crankshaft is rotatably mounted in bearings comprising bearing covers (2), a connecting rod that supports at least one piston being hinged to the crankshaft, wherein the piston is movable inside of a cylinder that is covered by a cylinder head, thereby forming a combustion chamber, and gas exchange valves are arranged in the cylinder head, the gas exchange valves being actuated by at least one camshaft which is connected, by means of a gear mechanism, to a crankshaft gear (1) which is arranged on the crankshaft, wherein a mass balancing gear mechanism having two balancing shafts (4) is present,
**characterized in that** the mass balancing gear mechanism is arranged in a gear mechanism frame (17) attached to the crankcase below the crankshaft and is driven by the crankshaft gear (1) arranged on the crankshaft by way of an intermediate gear (3) arranged next to the crankshaft gear (1), and wherein the intermediate gear (3) is arranged on the main bearing cover (2).

2. The internal combustion engine according to claim 1,
**characterized in that** the lubricating oil supply of an intermediate gear bearing is tapped, on the crankcase side, from a lubricating oil supply of a main bearing in such a way that a supply bore of a bearing block on the crankcase side is drilled into and further routed to the intermediate gear bearing which is integrated into the main bearing cover.

3. The internal combustion engine according to claim 1,
**characterized in that** the lubricating oil supply of an intermediate gear bearing is tapped, on the crankcase side, from a lubricating oil supply of a main bearing in such a way that an oil supply of the intermediate gear bearing occurs through the use of a bearing shell installed on the crankcase side, the bearing shell having an integrated oil supply groove on back side thereof.

4. A method for operating an internal combustion engine,
**characterized in that** a device according to one or more of the aforementioned claims is used.

## Revendications

1. Moteur à combustion interne comprenant un carter dans lequel un vilebrequin est monté de manière rotative dans des paliers avec des couvercles de palier (2), sur lequel est articulée au moins une bielle portant un piston, dans lequel le piston est mobile dans un cylindre recouvert par une culasse en formant une chambre de combustion et dans lequel des soupapes d'échange de gaz sont disposées dans la culasse, lesquelles sont actionnées par au moins un arbre à cames qui est relié par un engrenage à une roue dentée (1) de vilebrequin disposée sur le vilebrequin, dans lequel il existe un engrenage d'équilibrage des masses avec deux arbres d'équilibrage (4),
**caractérisé en ce que** l'engrenage d'équilibrage des masses est monté sur le carter dans un cadre (17) d'engrenage disposé en dessous du vilebrequin et est entraîné par la roue dentée (1) de vilebrequin disposée sur le vilebrequin via une roue intermédiaire (3) disposée à côté de la roue dentée (1) de vilebrequin, et dans lequel la roue intermédiaire (3) est disposée sur le couvercle de palier (2) principal.

2. Moteur à combustion interne selon la revendication 1,
**caractérisé en ce que** l'alimentation en huile de lubrification d'un logement de roue intermédiaire est prélevée du côté du carter à partir d'une alimentation en huile de lubrification d'un palier principal de telle sorte qu'un alésage d'alimentation d'un support de palier du côté du carter est percé et est transmis dans le logement de roue intermédiaire intégré dans le couvercle de palier principal.

3. Moteur à combustion interne selon la revendication 1,
**caractérisé en ce que** l'alimentation en huile de lubrification d'un logement de roue intermédiaire est prélevée du côté du carter à partir d'une alimentation en huile de lubrification d'un palier principal de telle sorte qu'une alimentation en huile du logement de roue intermédiaire a lieu grâce à un coussinet de palier monté du côté du carter avec une rainure d'alimentation en huile intégrée à l'arrière.

4. Procédé de mise en oeuvre d'un moteur à combustion interne,
**caractérisé en ce qu'**un dispositif selon l'une ou plusieurs des revendications précédentes est utilisé.
